# EUROPÄISCHE PATENTSCHRIFT

(11) **EP 1 210 802 B1**
(45) Veröffentlichungstag und Bekanntmachung des Hinweises auf die Patenterteilung: **18.07.2007**
(21) Anmeldenummer: 00963938.6
(22) Anmeldetag: 28.08.2000
(51) Int. Cl.: H04L 25/02

(54) **VERFAHREN UND VORRICHTUNG ZUR ÜBERTRAGUNG DIFFERENTIELLER SIGNALE**
METHOD AND DEVICE FOR THE TRANSMISSION OF DIFFERENTIAL SIGNALS
PROCEDE ET DISPOSITIF POUR LA TRANSMISSION DE SIGNAUX DIFFERENTIELS

(30) Priorität: 08.09.1999 DE 19942942
(43) Veröffentlichungstag der Anmeldung: 05.06.2002
(73) Patentinhaber: Infineon Technologies AG, 81669 München (DE)
(72) Erfinder: RENNER, Franz, 85457 Wörth (DE); ROSENBUSCH, Jens, 82008 Unterhaching (DE)
(74) Vertreter: Repkow, Ines
(86) Internationale Anmeldenummer: PCT/DE2000/002955
(87) Internationale Veröffentlichungsnummer: WO 2001/019042

(56) Entgegenhaltungen:
- EP-A- 0 606 888
- US-A- 4 121 118

## Beschreibung

Die Erfindung betrifft ein Verfahren zur Übertragung von abwechselnd niedrigen und hohen Pegel führenden Signalen auf Leitungspaaren, wobei die Signale auf der einen Leitung eines Leitungspaars einen Signalpegel komplementär zum demjenigen der Signale auf der anderen Leitung des Leitungspaars führen, wobei Signaltreiber zum Pegelwechsel der übertragenen Signale eingesetzt werden und eine Schaltung zur Durchführung dieses Verfahrens.

Zur Signalübertragung abwechselnd niedrigen und hohen Pegel führender Signale wird zunehmend differentielle Signalübertragung eingesetzt. Bei der differentiellen Signalübertragung werden Signalleitungspaare eingesetzt, deren beide Leitungen komplementäre Signalzustände übertragen. Als Beispiele sind hier Twisted-Pair-Signalübertragungen bzw. Taktsignale auf integrierten Schaltungen zu nennen. Aufgrund der komplementären Signalübertragung auf einem Leitungspaar ist es erforderlich, die Signalzustände auf der jeweiligen Leitung zyklisch, d.h. beim Übergang vom hohen Zustand zum niedrigen Zustand auf den beiden Leitungen umzuladen. Dieser Um-ladungsprozeß erfolgt mittels Signaltreiber, die durch diesen Umladungsprozeß stark belastet werden und damit einen relativ großen Stromverbrauch haben. Außerdem ist dieser Umladungsprozeß mit Störstrahlung (EMV) verbunden.

Eine Aufgabe der vorliegenden Erfindung besteht darin, ein Verfahren der eingangs genannten Art zu schaffen, daß zumindest eine verringerte Störstrahlung und einen niedrigeren Stromverbrauch gewährleistet. Außerdem soll durch die Erfindung eine Schaltung zur kostengünstigen und zuverlässigen Durchführung dieses Verfahrens geschaffen werden.

Gelöst wird diese Aufgabe hinsichtlich des eingangs genannten Verfahrens dadurch, daß die Signaltreiber zum Pegelwechsel der übertragenen Signale wie folgt eingesetzt werden:
- Trennen von an die beiden Leitungen komplementäre Spannungspegel anlegenden Signaltreibern von den Leitungen;
- gegenseitiges Kurzschließen der beiden Leitungen des Leitungspaares, um die beiden Leitungen auf ein identisches Zwischenpotential zwischen dem ersten und dem zweiten Spannungspegel zu legen;
- Aufheben des Kurzschlusses und Verbinden der Signaltreiber zum Anlegen entgegengesetzt komplementärer Spannungspegel an die beiden Leitungen.

Die erfindungsgemäße Schaltung zur Durchführung dieses Verfahrens sieht vor:
- einen ersten Schalter in einer den ersten Spannungspegel führenden Signalzuleitung zu der ersten Leitung des Leitungspaars;
- einen zweiten Schalter in einer den zweiten Spannungspegel führenden Signalzuleitung zu der ersten Leitung des Leitungspaars;
- einen dritten Schalter in einer den zweiten Spannungspegel führenden Signalzuleitung zu der zweiten Leitung des Leitungspaars;
- einen vierten Schalter in einer den ersten Spannungspegel führenden Signalzuleitung zu der zweiten Leitung des Leitungspaars;
- zumindest einen Kurzschlußschalter zum Kurzschließen der ersten Leitung des Leitungspaars mit der zweiten Leitung des Leitungspaars; und
- eine Steuerlogik zur Betätigung der Schalter derart,
   - daß zur Signalübertragung entweder der erste und der dritte Schalter oder der zweite und der vierte Schalter in Schließstellung gesteuert sind, während die jeweils anderen Schalter und der Kurzschlußschalter in Offenstellung gesteuert sind, und
   - daß zum Pegelwechsel die geschlossenen Schalter der ersten bis vierten Schalter in Offenstellung und der Kurzschlußschalter in Schließstellung gesteuert sind und daraufhin die vor dem Pegelwechsel geöffneten Schalter in Schließstellung und die vor dem Pegelwechsel geschlossenen Schalter und der Kurzschußschalter wieder in Öffnungsstellung gesteuert sind.

Während bislang beim Umladen der Signalpegelzustände auf den beiden Leitungen des Leitungspaars der jeweils bisher auf den Leitungen anliegende Energiepegel durch die zugeordneten Signaltreiber vernichtet und mit umgekehrten Vorzeichen wieder aufgebaut werden mußte, entfällt durch das erfindungsgemäße Verfahren die Vernichtung der in den Leitungen gespeicherten Energie durch die Signaltreiber. Dieser Zwischenschritt wird erfindungsgemäß ersetzt durch ein gegenseitiges Kurzschließen der Leitungen des Leitungspaars, um diese auf identisches Zwischenpotential zwischen niedrigem und hohem Signalpegel, d.h. auf Nullpegel zu legen. Erst dann werden die Signaltreiber wieder aktiviert, um jeweils komplementären Signalpegel in den Leitungen aufzubauen, jedoch ausgehend von dem energetisch günstigen Zwischenpegel. Da der Zwischenpegel nicht mit Hilfe der Signaltreiber bereitgestellt werden muß, ist das erfindungsgemäße Verfahren mit einem Energiespareffekt mit einer Einsparung an Strom in Höhe von 50% im Vergleich zum bisherigen Vorgehen verbunden. Da außerdem das bisherige Umschalten der Signaltreiber unter Last entfällt - die Signaltreiber werden erst dann wieder aktiviert, wenn die Leitungen identisches Zwischenpotential führen - ist das Aktivieren der Signaltreiber nicht mit der bislang schädlichen Störstrahlung (EMV) verbunden.

Die bei der erfindungsgemäßen Schaltung genutzten Schalter können in unterschiedlichster Weise realisiert sein. Bevorzugt sind aus energetischen Gründen und Gründen der Standzeit Halbleiterschalter.

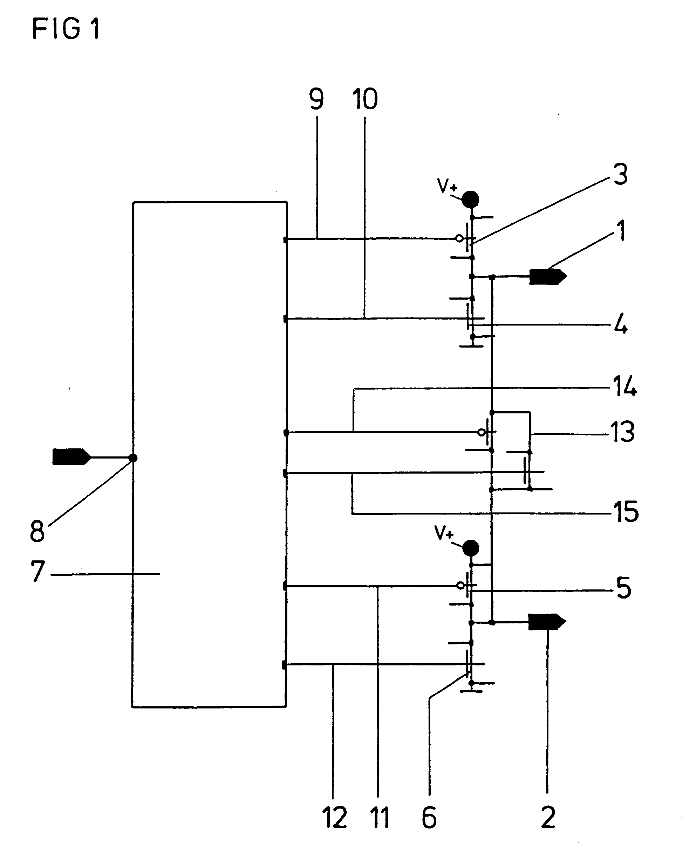

Nachfolgend wird die Erfindung anhand der Zeichnung beispielhaft näher erläutert; die einzige Figur der Zeichnung zeigt schematisch eine Ausführungsform der Schaltung zur Durchführung des erfindungsgemäßen Verfahrens.

Zur Übertragung von abwechselnd niedrigen und hohen pegelführenden Signalen durch differentielle Signalführung auf zwei Signalleitungen eines Signalleitungspaars umfaßt die Schaltung eine Steuerlogik zur Ansteuerung der Leitungen über Schalter zum Zuführen des jeweiligen Signalpegelzustands zu den Leitungen des differentiell gespeisten Leitungspaars. Im einzelnen umfaßt die Schaltung zur Signalzufuhr zu den Leitugen 1, 2 jeweils ein Paar von Schaltern, nämlich ein Paar von Schaltern 3, 4 für die erste Leitung 1 und ein Paar von Schaltern 5, 6 für die zweite Leitung 2. Die Schalter 3, 4 und 5, 6 sind in Reihe zwischen eine positive Versorgungsspannung V₊ und Masse geschaltet. Angesteuert werden die Schalter mittels der Steuerlogik 7, die ihrerseits über einen Eingang 8 durch eine nicht gezeigte externe Vorrichtung gesteuert ist, über Steuerleitungen 9, 10 und 11, 12. Im einzelnen wird der Schalter 3 durch die Steuerlogik 7 über die Steuerleitung 9 gesteuert. Der Schalter 4 wird über die Steuerleitung 10 durch die Steuerlogik 7 gesteuert. Der Schalter 5 wird über die Steuerleitung 11 durch die Steuerlogik 7 gesteuert und der Schalter 6 wird über die Steuerleitung 12 durch die Steuerlogik 7 gesteuert. Die Leitung 1 ist mit den miteinander verbundenen Schalterausgängen der Schalter 3, 4 verbunden. In ähnlicher Weise ist die Leitung 2 mit den miteinander verbundenen Schalterausgängen der Schalter 5, 6 verbunden.

Die Steuerlogik 7 steuert die Schalter 3, 4 und 5, 6 derart an, daß dann, wenn an der Leitung 1 hoher Pegel anliegt, an der komplementären Leitung 2 komplementär niedriger Pegel anliegt und umgekehrt. Im einzelnen wird der Signalzustand auf den Leitungen 1, 2 wie folgt eingestellt. Die Schalter 3 und 5, die unmittelbar an positive Spannungsversorgung angeschlossen sind, stellen im geschlossenen Zustand hohen Pegel bereit, während die Schalter 4 und 6, die unmittelbar mit Masse verbunden sind, im eingeschalteten Zustand niedrigen Pegel zur Verfügung stellen. Dies erfolgt gesteuert über die Steuerlogik 7, wie vorstehend angeführt. Wenn die Leitung 1 hohen Pegel und die Leitung 2 niedrigen Pegel führt, sind demnach der Schalter 3 und der Schalter 6 über die Steuerleitungen 9, 12 durch die Steuerlogik 7 in geschlossenen Zustand gesteuert, während die weiteren Schalter 4 und 5 über die zugehörigen Steuerleitungen 10, 11 geöffnet sind. Für den Fall, daß an der Leitung 1 niedriger Pegel anliegt und an der Leitung 2 komplementär hierzu hoher Pegel, sind der Schalter 4 und 5 geschlossen und der Schalter 3 und 6 geöffnet, jeweils wiederum gesteuert über die Steuerleitungen 9 bis 12 mittels der Steuerlogik 7.

Soweit entspricht diese Schaltung dem Stand der Technik, der mit dem Nachteil behaftet ist, daß beim Umsteuern des an die Leitungen 1, 2 angelegten Pegels mittels der Schalter bzw. Treiber diese entsprechend belastet werden; d.h. diese Treiber bzw. Schalter müssen die in den Leitungen gespeicherten Energien zunächst vernichten und daraufhin entgegengesetzte Pegel aufbauen und anlegen.

Um dies zu vermeiden ist erfindungsgemäß ein Kurzschlußschalter 13 vorgesehen. Dieser Kurzschlußschalter, der bei der dargestellten Ausführungsform aus zwei Schaltelementen besteht, ist über Steuerleitungen 14, 15 mit der Steuerlogik 7 verbunden.

Die Steuerlogik 7 steuert nunmehr die Schalter (Treiber) einschließlich des Kurzschlußschalters wie folgt: Wenn die Pegel auf den Leitungen 1, 2 aufgrund eines Eingangssignals am Eingang 8 der Steuerlogik in entgegengesetzte komplementäre Pegel umgeschaltet werden sollen, werden auch die beiden aktuell geschlossenen Schalter 3, 6 bzw. 4, 5 geöffnet, so daß sämtliche Schalter 1 bis 6 offenstehen, woraufhin der im normalen Betrieb geöffnete Kurzschlußschalter 13 durch die Steuerlogik 7 geschlossen wird und damit die beiden Leitungen 1, 2 miteinander verbindet bzw. gegenseitig kurzschließt, und zwar unter Bildung eines Zwischenpotentials auf den beiden Leitungen 1, 2 zwischen niedrigem und hohen Pegel (Nullpegel). Sobald dieses Zwischenpotential ausgebildet ist, wird der Kurzschlußschalter 13 geöffnet und das andere Paar von Schaltern 4, 5 wird geschlossen, während das erstgenannte Paar 3, 6 nunmehr offen bleibt. Dadurch wird der neue Signalpegel auf den Leitungen 1, 2 getrieben, ohne daß die Treiber bzw. Schalter 3 bis 6 während des Pegelumschaltens belastet werden, um die auf den Leitungen 1, 2 geführte Energie zu vernichten.

### Bezugszeichenliste

- 1: Leitung
- 2: Leitung
- 3: Schalter
- 4: Schalter
- 5: Schalter
- 6: Schalter
- 7: Steuerlogik
- 8: Eingang
- 9: Steuerleitung
- 10: Steuerleitung
- 11: Steuerleitung
- 12: Steuerleitung
- 13: Kurzschlußschalter
- V₊: positive Versorgungsspannung

## Patentansprüche

1. Verfahren, durch welches über eine erste Leitung (1) eines Leitungspaares (1, 2) ein erstes Signal und über eine zweite Leitung (2) des Leitungspaares (1, 2) ein zweites Signal übertragen werden,
- wobei die Signale jeweils abwechselnd einen ersten Spannungspegel und einen sich vom ersten Spannungspegel unterscheidenden zweiten Spannungspegel aufweisen,
- wobei das erste Signal jeweils einen Spannungspegel aufweist, der komplementär zum Spannungspegel des zweiten Signals ist, und
- wobei zum Pegelwechsel der übertragenen Signale folgende Schritte ausgeführt werden:
- Trennen von an die beiden Leitungen komplementäre Spannungspegel anlegenden Signaltreibern von den Leitungen;
- gegenseitiges Kurzschließen der beiden Leitungen des Leitungspaares, um die beiden Leitungen auf ein identisches Zwischenpotential zwischen dem ersten und dem zweiten Spannungspegel zu legen;
- Aufheben des Kurzschlusses und Verbinden der Signaltreiber zum Anlegen entgegengesetzt komplementärer Spannungspegel an die beiden Leitungen.

2. Verfahren nach Anspruch 1,
**dadurch gekennzeichnet,**
**daß** das Aufheben des Kurzschlusses und das Verbinden der Signaltreiber zum Anlegen entgegengesetzt komplementärer Spannungspegel an die beiden Leitungen (1, 2) erfolgt, sobald sich auf den Leitungen ein zwischen dem den zweiten Spannungspegel repräsentierenden Potential und dem den ersten Spannungspegel repräsentierenden Potential liegendes Zwischenpotential gebildet hat.

3. Schaltung zur Durchführung des Verfahrens nach Anspruch 1, aufweisend:
- einen ersten Schalter (3) in einer den ersten Spannungspegel (V+) führenden Signalzuleitung zu der ersten Leitung (1) des Leitungspaars;
- einen zweiten Schalter (4) in einer den zweiten Spannungspegel (Masse) führenden Signalzuleitung zu der ersten Leitung (1) des Leitungspaars;
- einen dritten Schalter (6) in einer den zweiten Spannungspegel (Masse) führenden Signalzuleitung zu der zweiten Leitung (2) des Leitungspaars;
- einen vierten Schalter (5) in einer den ersten Spannungspegel (V+) führenden Signalzuleitung zu der zweiten Leitung (2) des Leitungspaars;
- zumindest einen Kurzschlußschalter (13) zum Kurzschließen der ersten Leitung (1) des Leitungspaars mit der zweiten Leitung (2)des Leitungspaars; und
- eine Steuerlogik (7) zur Betätigung der Schalter (3 bis 6, 13) derart,
- daß zur Signalübertragung entweder der erste (3) und der dritte Schalter (6) oder der zweite (4) und der vierte (5) Schalter in Schließstellung gesteuert sind, während die jeweils anderen Schalter und der Zumindest eine Kurzschlußschalter in Offenstellung gesteuert sind, und
- daß zum Pegelwechsel die geschlossenen Schalter der ersten bis vierten Schalter (3 bis 6) in Offenstellung und der Zumindest eine Kurzschlußschalter (13) in Schließstellung gesteuert sind und daraufhin die vor dem Pegelwechsel geöffneten Schalter in Schließstellung und die vor dem Pegelwechsel geschlossenen Schalter und der Zumindest eine Kurzschußschalter wieder in Öffnungsstellung gesteuert sind.

4. Schaltung nach Anspruch 3,
**dadurch gekennzeichnet,**
**daß** die Steuerlogik (7) die vor dem Pegelwechsel geschlossenen Schalter und den zumindest einen Kurzschlußschalter (13) öffnet und die vor dem Pegelwechsel geöffneten Schalter schließt, sobald sich auf den Leitungen (1, 2) ein zwischen dem den zweiten Spannungspegel repräsentierenden Potential und dem den ersten Spannungspegel repräsentierenden Potential liegendes Zwischenpotential gebildet hat.

## Claims

1. Method by which a first signal is transmitted via a first line (1) of a line pair (1, 2) and a second signal is transmitted via a second line (2) of the line pair (1, 2),
- the signals in each case alternately having a first voltage level and a second voltage level, which differs from the first voltage level,
- the first signal in each case having a voltage level complementary to the voltage level of the second signal, and
- the following steps being performed for the level change of the transmitted signals
- isolation of signal drivers which apply complementary voltage levels to the two lines from the lines;
- mutual short-circuiting of the two lines of the line pair in order to put the two lines at an identical intermediate potential between the first and second voltage levels;
- cancellation of the short circuit and connection of the signal drivers for the application of oppositely complementary voltage levels to the two lines.

2. Method according to Claim 1,
**characterized**
**in that** the cancellation of the short circuit and the connection of the signal drivers for the application of oppositely complementary voltage levels to the two lines (1, 2) are effected as soon as an intermediate potential lying between the potential which represents the second voltage level and the potential which represents the first voltage level has formed on the lines.

3. Circuit for carrying out the method according to Claim 1, having:
- a first switch (3) in a signal lead carrying the first voltage level (V+) to the first line (1) of the line pair;
- a second switch (4) in a signal lead carrying the second voltage level (earth) to the first line (1) of the line pair;
- a third switch (6) in a signal lead carrying the second voltage level (earth) to the second line (2) of the line pair;
- a fourth switch (5) in a signal lead carrying the first voltage level (V+) to the second line (2) of the line pair;
- at least one short-circuiting switch (13) for short-circuiting the first line (1) of the line pair to the second line (2) of the line pair; and
- a control logic unit (7) for actuating the switches (3 to 6, 13) in such a way
- that, for signal transmission, either the first (3) and the third switch (6) or the second (4) and the fourth (5) switch are controlled in the closed position, while the respective other switches and the at least one short-circuiting switch are controlled in the open position, and
- that, for the level change, the closed switches of the first to fourth switches (3 to 6) are controlled in the open position and the at least one short-circuiting switch (13) is controlled in the closed position and, afterward, the switches that were opened before the level change are controlled in the closed position and the switches that were closed before the level change and the at least one short-circuiting switch are controlled in the opening position again.

4. Circuit according to Claim 3,
**characterized**
**in that** the control logic unit (7) opens the switches closed before the level change and the at least one short-circuiting switch (13) and closes the switches opened before the level change, as soon as an intermediate potential lying between the potential which represents the second voltage level and the potential which represents the first voltage level has formed on the lines (1, 2).

## Revendications

1. Procédé au moyen duquel un premier signal est transmis par une première ligne (1) d'une paire de lignes (1, 2) et un second signal est transmis par une seconde ligne (2) de la paire de lignes (1, 2),
- chacun des deux signaux présentant alternativement un premier niveau de tension et un second niveau de tension différent du premier niveau de tension,
- le premier signal présentant à chaque fois un niveau de tension complémentaire au niveau de tension du second signal, et
- les opérations suivantes étant exécutées pour le changement de niveau des signaux transmis :
- séparation des circuits d'attaque, qui appliquent des niveaux de tension complémentaires aux deux lignes, des lignes ;
- mise en court-circuit mutuel des deux lignes de la paire de lignes, afin d'amener les deux lignes à un potentiel intermédiaire identique entre le premier et le second niveau de potentiel ;
- suppression du court-circuit et raccordement des circuits d'attaque pour l'application de niveaux de tension opposés complémentaires aux deux lignes.

2. Procédé selon la revendication 1,
**caractérisé en ce que**
la suppression du court-circuit et le raccordement des circuits d'attaque pour l'application de niveaux de tension opposés complémentaires aux deux lignes (1, 2) s'effectuent dès qu'un potentiel intermédiaire, situé entre le potentiel représentant le second niveau de tension et le potentiel représentant le premier niveau de tension, s'est formé sur les lignes.

3. Circuit pour la réalisation du procédé selon la revendication 1, comprenant :
- un premier commutateur (3) sur une ligne d'amenée de signal fournissant le premier niveau de tension (V+) à la première ligne (1) de la paire de lignes ;
- un deuxième commutateur (4) sur une ligne d'amenée de signal fournissant le second niveau de tension (masse) à la première ligne (1) de la paire de lignes ;
- un troisième commutateur (6) sur une ligne d'amenée de signal fournissant le second niveau de tension (masse) à la seconde ligne (2) de la paire de lignes ;
- un quatrième commutateur (5) sur une ligne d'amenée de signal fournissant le premier niveau de tension (V+) à la seconde ligne (2) de la paire de lignes ;
- au moins un commutateur de court-circuit (13) pour la mise en court-circuit de la première ligne (1) de la paire de lignes avec la seconde ligne (2) de la paire de lignes ; et
- une logique de commande (7) pour l'actionnement des commutateurs (3 à 6, 13) de telle sorte :
- que, pour la transmission du signal, soit le premier commutateur (3) et le troisième commutateur (6), soit le deuxième commutateur (4) et le quatrième commutateur (5), sont commutés en position de fermeture, alors que les autres commutateurs respectifs et l'au moins un commutateur de court-circuit sont commutés en position d'ouverture, et
- que, pour le changement de niveau, les commutateurs fermés des premier à quatrième commutateurs (3 à 6) sont commutés en position d'ouverture et l'au moins un commutateur de court-circuit (13) est commuté en position de fermeture, et qu'ensuite les commutateurs qui ont été ouverts avant le changement de niveau sont de nouveau commutés en position de fermeture et les commutateurs qui ont été fermés avant le changement de niveau et l'au moins un commutateur de court-circuit sont de nouveau commutés en position d'ouverture.

4. Circuit selon la revendication 3,
**caractérisé en ce que**
la logique de commande (7) ouvre les commutateurs qui ont été fermés avant le changement de niveau et l'au moins un commutateur de court-circuit (13) et ferme les commutateurs qui ont été ouverts avant le changement de niveau dès qu'un potentiel intermédiaire, situé entre le potentiel représentant le second niveau de tension et le potentiel représentant le premier niveau de tension, s'est formé sur les lignes (1, 2).
